# EUROPEAN PATENT APPLICATION

(11) **EP 4 821 358 A1**
(43) Date of publication of application: **14.10.2026**
(21) Application number: 26170688.1
(22) Date of filing: 02.04.2026
(51) Int. Cl.: A01M 7/00

(54) **AGRICULTURAL TENDERING CONTROL SYSTEM**

(30) Priority: 08.04.2025 US 202563785186 P; 25.03.2026 US 202619578087
(71) Applicant: Deere & Company, Moline, IL 61265-8098 (US)
(72) Inventor: LARSEN, Lucas B., 68163 Mannheim (DE); BARTLETT, Thomas G., 68163 Mannheim (DE); OLSON, Christian R., 68163 Mannheim (DE)
(74) Representative: Isarpatent

(57) **Abstract**

A tendering system for an agricultural sprayer includes a first tank sensor configured to generate a first signal based on a level of fluid in a first tank of the agricultural sprayer, a first fill valve configured to control a flow of liquid from tendering equipment into the first tank of the agricultural sprayer, and a tendering module configured to control the actuation of the first tank fill valve and tendering equipment based on at least one of the first signal generated by the first tank sensor and field data.

## Description

### CROSS-REFERENCE TO RELATED APPLICATIONS

This application claims the benefit of U.S. Provisional Application No. 63/785,186, filed April 8, 2025. The entire disclosure of the application referenced above is incorporated by reference.

### FIELD

The present disclosure relates to sprayers, and in particular, to the tendering of an agricultural sprayer.

### BACKGROUND

With respect to at least agricultural operations, a range of materials, also referred to as commodities, can be conveyed between vehicles. For example, commodities such as fertilizer, seed, and chemicals, among others, can be transported into fields, among other locations, using various tender vehicles. The commodities can then subsequently be transferred to another agricultural vehicle that can apply the commodity to the field, including to associated crops within the field.

The background description provided here is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

### SUMMARY

A tendering system for an agricultural sprayer includes a first tank sensor configured to generate a first signal based on a level of fluid in a first tank of the agricultural sprayer, a first fill valve configured to control a flow of liquid from tendering equipment into the first tank of the agricultural sprayer, and a tendering module configured to control the actuation of the first tank fill valve and tendering equipment based on at least one of the first signal generated by the first tank sensor and field data.

In other features, the tendering system includes a second tank sensor configured to generate a second signal based on a level of fluid in a second tank of the agricultural sprayer and a second fill valve configured to control a flow of liquid from the tendering equipment into the second tank of the agricultural sprayer. The tendering module is configured to control the actuation of the second tank fill valve and the tendering equipment based on at least one of the second signal generated by the second tank sensor and the field data.

In other features, the tendering module includes a fill tank module configured to receive the first signal generated by the first tank sensor and determine, based on the first signal and a capacity of the first tank, an amount of material needed to fill the first tank. The tendering module also includes a tank loading module configured to receive the amount of material needed to fill the first tank from the fill tank module and selectively generate a first control signal that causes the tendering equipment to transfer the amount of material needed to fill the first tank to the first tank.

In other features, the tendering module includes a field finish module configured to receive the first signal generated by the first tank sensor and the field data and determine an amount of material needed to finish a spraying operation in a field the agricultural sprayer is operating in. The tank loading module is configured to selectively generate a second control signal that causes the tendering equipment to transfer the amount of material needed to finish the spraying operation to the first tank.

In other features, the tank loading module generates the first control signal or the second control signal in response to receiving a selection by an operator of the agricultural sprayer.

In other features, the field data includes agronomic information of the field the agricultural sprayer is operating in.

In other features, the agronomic information includes at least one of a size of the field, an area of the field that has been traversed by the agricultural sprayer or that material has been applied to, crop density, weed pressure, and prescribed application rates.

In other features, the tendering system includes an operator display configured to receive the amount of material needed to fill the first tank from the fill tank module and display a visual indication of the amount of material needed to fill the first tank valve to an operator of the agricultural sprayer.

A method of tendering an agricultural sprayer includes determining a level of fluid in a first tank of the agricultural sprayer, calculating an amount of material needed to fill the first tank based on the determined level of fluid in the first tank and a capacity of the first tank, and in response to receiving a first user input, opening a first fill valve to permit a flow of liquid from tendering equipment into the first tank and commanding the tendering equipment to transfer the amount of material needed to fill the first tank to the first tank via the first fill valve.

In other features, the method of tendering an agricultural sprayer includes determining a level of fluid in a second tank of the agricultural sprayer, calculating an amount of material needed to fill the second tank based on the determined level of fluid in the second tank and a capacity of the second tank, and in response to receiving the first user input, opening a second fill valve to permit a flow of liquid from the tendering equipment into the second tank and commanding the tendering equipment to transfer the amount of material needed to fill the second tank to the second tank via the second fill valve.

In other features, the method of tendering an agricultural sprayer includes, in response to determining that the tendering equipment transferred the amount of material needed to fill the first tank to the first tank, (i) commanding the tendering equipment to stop transferring material to the first tank and (ii) closing the first fill valve.

In other features, commanding the tendering equipment to transfer the amount of material needed to fill the first tank to the first tank includes communicating with the tendering equipment via a wireless connection.

In other features, the method of tendering an agricultural sprayer includes receiving agronomic information of a field the agricultural sprayer is operating in, determining, based on the received agronomic information, an amount of material needed to finish a spraying operation in the field, and in response to receiving a second user input, opening the first fill valve to permit a flow of liquid from the tendering equipment into the first tank and commanding the tendering equipment to transfer the amount of material needed to finish the spraying operation to the first tank via the first fill valve.

In other features, the agronomic information includes at least one of a size of the field, an area of the field that has been traversed by the agricultural sprayer or that material has been applied to, crop density, weed pressure, and prescribed application rates.

A non-transitory computer-readable medium stores processor-executable instructions for controlling the tendering of an agricultural sprayer. The instructions include determining a level of fluid in a first tank of the agricultural sprayer, calculating an amount of material needed to fill the first tank based on the determined level of fluid in the first tank and a capacity of the first tank, and in response to receiving a first user input, opening a first fill valve to permit a flow of liquid from tendering equipment into the first tank and commanding the tendering equipment to transfer the amount of material needed to fill the first tank to the first tank via the first fill valve.

In other features, the stored instructions include determining a level of fluid in a second tank of the agricultural sprayer, calculating an amount of material needed to fill the second tank based on the determined level of fluid in the second tank and a capacity of the second tank, and in response to receiving the first user input, (i) opening a second fill valve to permit a flow of liquid from the tendering equipment into the second tank and (ii) commanding the tendering equipment to transfer the amount of material needed to fill the second tank to the second tank via the second fill valve.

In other features, the stored instructions include, in response to determining that the tendering equipment transferred the amount of material needed to fill the first tank to the first tank, (i) commanding the tendering equipment to stop transferring material to the first tank and (ii) closing the first fill valve.

In other features, commanding the tendering equipment to transfer the amount of material needed to fill the first tank to the first tank includes communicating with the tendering equipment via a wireless connection.

In other features, the stored instructions include receiving agronomic information of a field the agricultural sprayer is operating in, determining, based on the received agronomic information, an amount of material needed to finish a spraying operation in the field, and in response to receiving a second user input, opening the first fill valve to permit a flow of liquid from the tendering equipment into the first tank and commanding the tendering equipment to transfer the amount of material needed to finish the spraying operation to the first tank via the first fill valve.

In other features, the agronomic information includes at least one of a size of the field, an area of the field that has been traversed by the agricultural sprayer or that material has been applied to, crop density, weed pressure, and prescribed application rates.

Further areas of applicability of the present disclosure will become apparent from the detailed description, the claims, and the drawings. The detailed description and specific examples are intended for purposes of illustration only and are not intended to limit the scope of the disclosure.

### BRIEF DESCRIPTION OF THE DRAWINGS

The present disclosure will become more fully understood from the detailed description and the accompanying drawings.
FIG. 1 is a top view of a sprayer system attached to a work machine according to the principles of the present disclosure.
FIG. 2 is a functional block diagram of an example implementation of a tendering control system according to the principles of the present disclosure.
FIG. 3 is a flowchart depicting an example operation of the tendering control system.
FIG. 4 is a flowchart depicting an example process of determining an amount of material needed to fill a tank.
FIG. 5 is a flowchart depicting an example process of determining amounts of material needed to finish a field using a broadcast application.
FIG. 6 is a flowchart depicting an example process of determining amounts of material needed to finish a field based on agronomic details of the field.
FIG. 7 is a flowchart depicting an example process of performing a tendering operation.

In the drawings, reference numbers may be reused to identify similar and/or identical elements.

### DETAILED DESCRIPTION

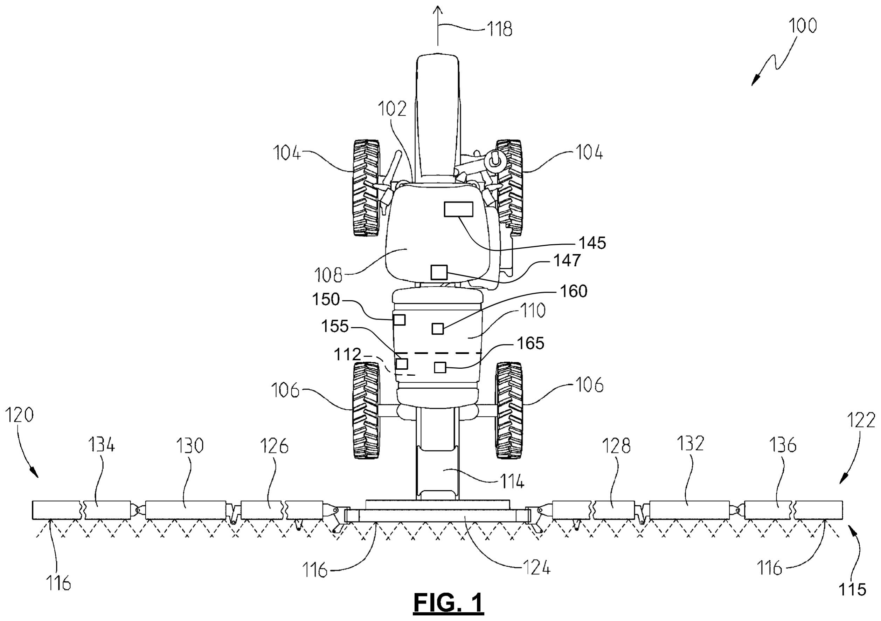

FIG. 1 illustrates an example vehicle carrying a spray boom with spray nozzles mounted on the boom. The vehicle may be a platform or dolly for industrial spray applications or a tractor towing ground-engaging tillage left/right wings with disks and shanks, or a planter towing a row of seed dispenser modules. In FIG. 1 the vehicle is a towed sprayer or a self-propelled agricultural sprayer 100 including a vehicle main frame 102 and an attached autonomous control station or an operator cab 108 for controlling the agricultural sprayer 100. The main frame 102 may be supported by a plurality of ground-engaging mechanisms. In FIG. 1, a pair of front wheels 104 and a pair of rear wheels 106 support the main frame and may propel the vehicle in at least a forward travel direction 118.

In some implementations, only a first tank 110 is mounted to the frame 102 or another frame (not shown) which is attached to the main frame 102. In other implementations, both the first tank 110 and a second tank 112 are mounted to the frame 102 or another frame (not shown) which is attached to the main frame 102. The first tank 110 and the second tank 112 may contain a spray liquid or other substance to be discharged during a spraying operation. In some implementations, the first tank 110 and the second tank 112 are two separate tanks. In other implementations, the first tank 110 and the second tank 112 are different portions-e.g., sealed compartments-of a single tank.

A fixed or floating center frame 114 is coupled to a front or a rear of the main frame 102. In FIG. 1, the center frame 114 is shown coupled to the rear of the main frame 102. The center frame 114 may support an articulated folding spray boom assembly 115 that is shown in FIG. 1 in a fully extended working position for spraying a field. In other implementations, the spray boom assembly 115 may be mounted in front of the agricultural sprayer 100.

A plurality of spray nozzles 116 can be mounted along a plurality of fluid distribution pipes or spray pipes (not shown) that are mounted to the spray boom assembly 115. The plurality of distribution pipes includes a first distribution pipe and a second distribution pipe. Each distribution pipe may be fluidly coupled to the first tank 110 and/or the second tank 112. Each nozzle 116 can have multiple spray outlets, each of which conducts fluid to a same-type or different-type of spray tip. The nozzles 116 on the spray boom assembly 115 can be divided into boom frames or wing structures such as 124, 126, 128, 130, 132, 134, and 136 (or collectively "spray section(s)"). In FIG. 1, the plurality of groups or sections may include a center boom frame 124 which may be coupled to the center frame 114. The spray boom assembly 115 may be further divided into a first or left boom 120 and a second or right boom 122. In FIG. 1, the first boom 120 is shown on a left side of the spray boom assembly 115, and the second boom 122 is depicted on the right side thereof.

An operator interface 145 is positioned in the operator cab 108. In some implementations, the operator interface 145 includes a display screen-for example, a liquid crystal display (LCD), a light emitting diode (LED) screen, an organic LED (OLED) screen, or a cathode ray tube (CRT) display. The display screen of the operator interface 145 may present, via a graphical user interface (GUI), various features and/or parameters of the agricultural sprayer 108. In various implementations, the operator interface 145 may include one or more user input devices-for example, buttons, switches, touch screens, and/or levers. The operator of agricultural sprayer 108 may adjust various operating parameters of the agricultural sprayer 108 via the operator interface 145-for example, by actuating one or more of the user input devices.

As shown in FIG. 1, the agricultural sprayer 108 includes a tendering module 147, a first level sensor 150, a second level sensor 155, a first tank fill valve 160, and a second tank fill valve 165. The first level sensor 150 measures the level of the contents of the first tank 110. Similarly, the second level sensor 155 measures the level of the contents of the second tank 112. The first tank fill valve 160 permits or restricts the flow of fluid into the first tank 110. Similarly, the second tank fill valve 165 permits or restricts the flow of fluid into the second tank 112.

The operator interface 145, the first tank sensor 150, the second tank sensor 155, the first tank fill valve 160, the second tank fill valve 165, and the tendering module 147 may exchange data-for example, parameters and instructions-via a network such as a controller area network. The network may include one or more data buses.

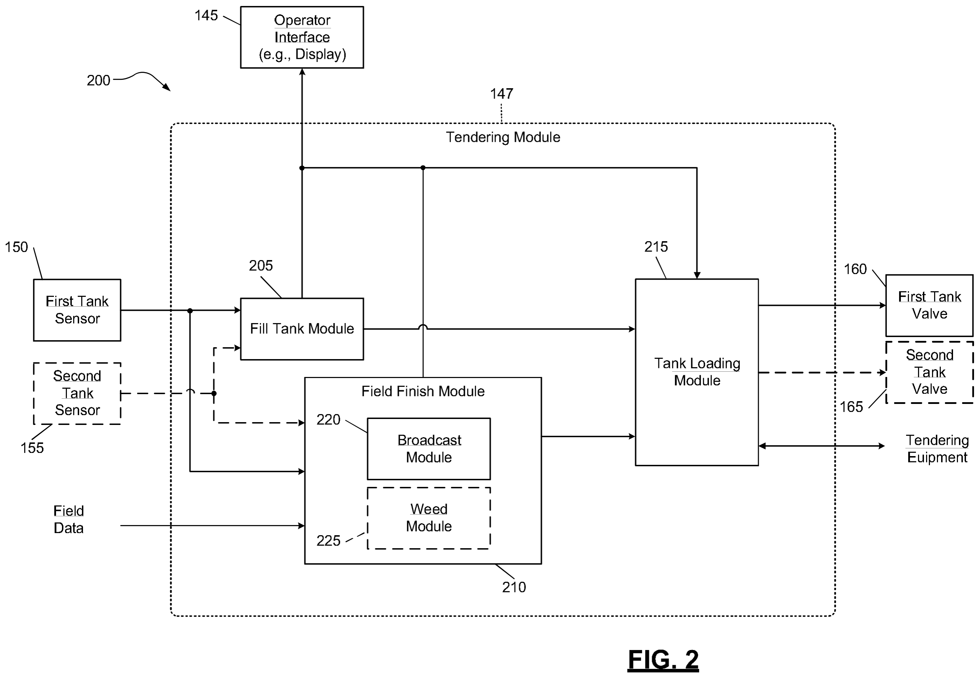

FIG. 2 is a functional block diagram of an example implementation of a tendering system 200. As shown in FIG. 2, the tendering system 200 includes the operator interface 145, the tendering module 147, the first tank sensor 150, and the first tank fill valve 160. In some implementations, the tendering system 200 also includes the second tank sensor 155 and the second tank fill valve 165. The tendering module 147 may include a fill tank module 205, a field finish module 210, and a tank loading module 215. In various examples, the tendering module 147 may be a standalone module in the agricultural sprayer 108, as illustrated in the example of FIG. 2. In other examples, at least one of the fill tank module 205, the field finish module 210, and the tank loading module 215 may be implemented independently or with one or more other modules of the agricultural sprayer 108.

The fill tank module 205 receives signals that indicate the current level of material-e.g., fluid-in each tank of the agricultural sprayer 108. For example, the fill tank module 205 receives a signal from the first tank sensor 150 that indicates the current level of material in the first tank 110. The tank fill module 205 may also receive a signal from the second tank sensor 155 that indicates the current level of material in the second tank 112. The fill tank module 205 determines the amount of material needed to fill each tank of the agricultural sprayer 108 based on the current level of the tank and the capacity of the tank. In various implementations, the capacity of each tank of the agricultural sprayer 108 is a stored value. In some implementations, an operator of the agricultural sprayer 108 may change the prestored capacity of a tank to another suitable value-for example, via the operator interface 145. The fill tank module 205 outputs the determined fill value for each tank to the tank loading module 215. The fill tank module 205 also outputs the determined fill value for each tank to the operator interface 145 for display to the operator.

The field finish module 210 receives field data that includes agronomic information of the current field the agricultural sprayer 108 is operating in. The field data may include the total size of the field, the portion and size (absolute or relative) of the field that has been completed-i.e., area of the field that has been traversed by the agricultural sprayer 108 and/or that material has been applied to. The field data may also include indications of crop density, weed pressure, and prescribed application rates and/or actual application rates associated with the current field.

The field finish module 210 also receives signals indicative of the current level of material in each tank of the agricultural sprayer 108. For example, the field finish module 210 receives the signal from the first tank sensor 150 that indicates the current level of material in the first tank 110. The field finish module 210 may also receive a signal from the second tank sensor 155 that indicates the current level of material in the second tank 112.

The field finish module 210 includes a broadcast module 220 that determines the amount of material needed to complete the current field using a broadcast application of material based on the field data. In some implementations, the field finish module includes a weed module 225 that determines the amount of material needed to complete the current field based on weed pressure data or other information in the field data indicative of the amount of weeds-e.g., the number and/or size-in the current field.

The field finish module 210 outputs the values determined by the broadcast module 220 and/or the weed module 225 to the tank loading module 215. The field finish module 210 also outputs the determined values for each tank to the operator interface 145 for display to the operator.

The tank loading module 215 controls tendering operations-e.g., the transfer of material from tendering equipment to one or more tanks of the agricultural sprayer 108. The tank loading module 215 receives inputs from the operator via the operator interface 145 regarding the initiation of a tendering operation and which values to use for the tendering operation. The tank loading module outputs signals that control tank fill valves on the agricultural sprayer 108. For example, the tank loading module 215 may generate signals to control the first tank fill valve 160 and/or the second tank fill valve 165. The tank loading module 215 is also in communication with the tendering equipment. For example, the tank loading module 215 may generate signals that control one or more components of the tendering equipment-such as a tendering pump. In addition, the tank loading module 215 may receive information from the tendering equipment-for example, an overall status of the tendering equipment or the status of one or more components thereof. In some implementations, the tank loading module 215 communicates with the tendering equipment via a wireless connection. In other implementations, the tank loading module 215 communicates with the tendering equipment via a wired connection-e.g., a cable.

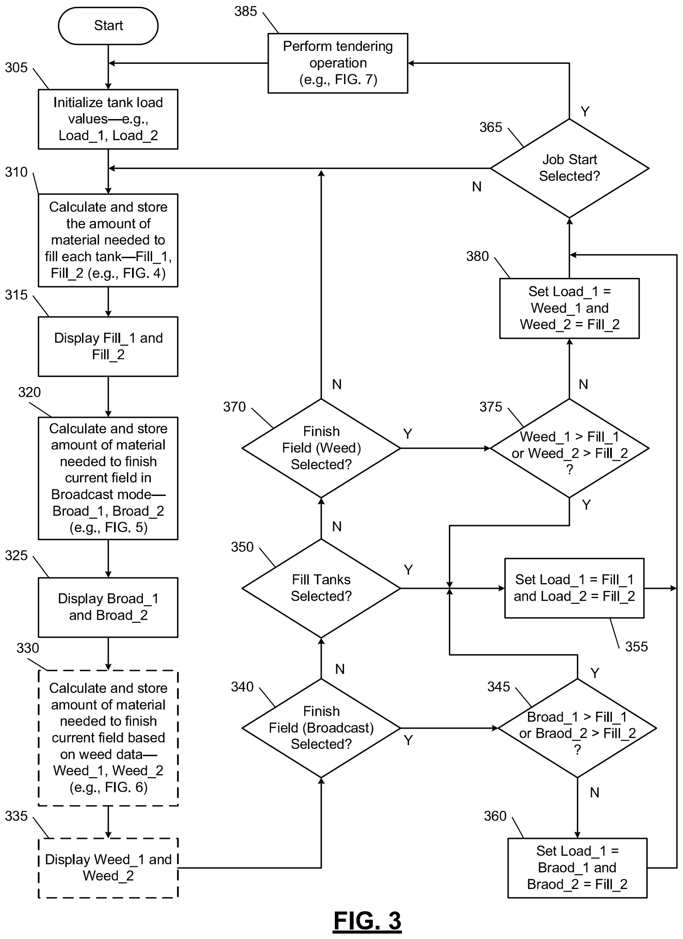

FIG. 3 is a flowchart depicting an example method of control tendering of the agricultural sprayer 108. In an example implementation, control may be performed by the tendering module 147. In other implementations, control may be performed by one or more controllers on the agricultural sprayer 108.

Control begins at 305. In some implementations, control begins upon startup of the agricultural sprayer 108. In other implementations, control begins in response to the detection of an operator selection-for example, via the operator interface 145. At 305, control initializes variables used to store the loading value for each tank of the agricultural sprayer 108 (Load_1, Load_2). Control continues with 310.

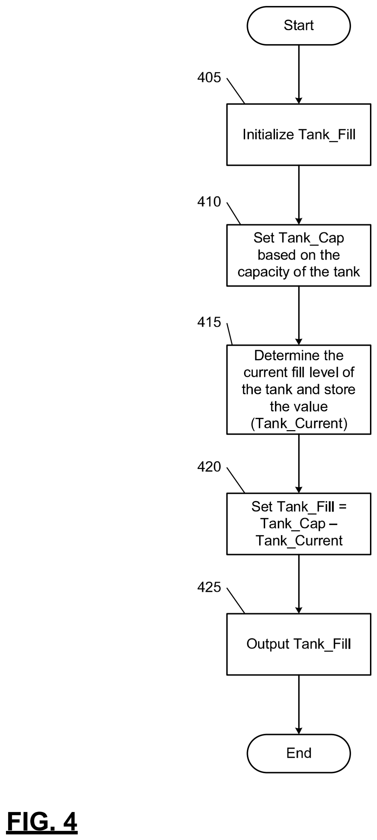

At 310, control calculates, for each tank of the agricultural sprayer 108, the amount of material needed to fill the tank, as described in more detail in FIG. 4. Control then stores the calculated values (Fill_1, Fill_2). At 315, control displays to the operator the calculated amounts of material needed to fill each tank. For example, control outputs the calculated values to the operator interface 145. Control continues with 320.

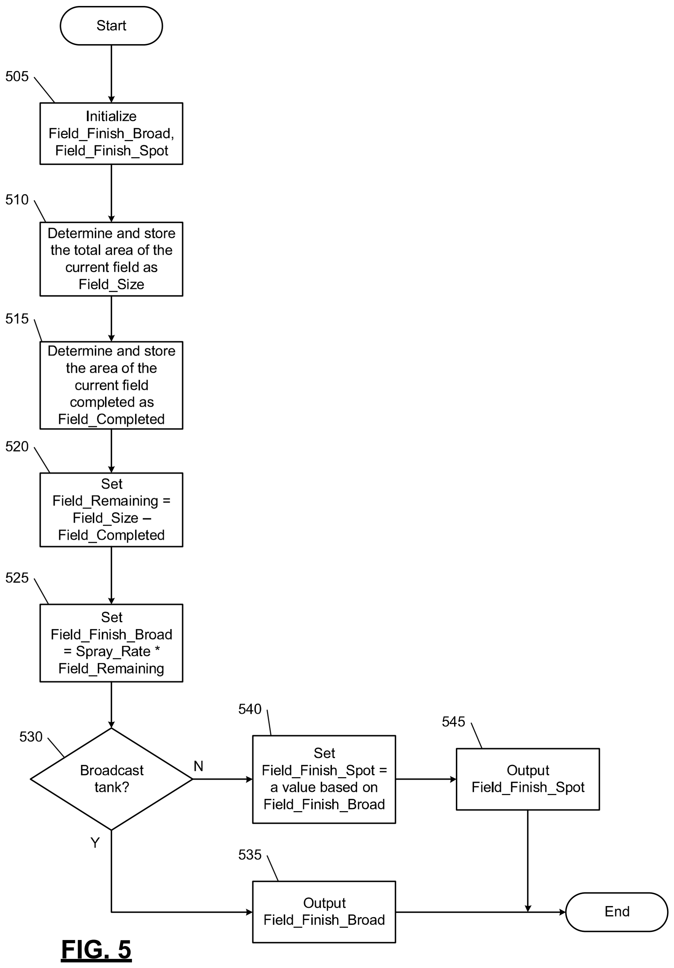

At 320, control calculates the amount of material in each tank needed to finish the field the agricultural sprayer 108 is currently operating in using a broadcast application of material from at least one tank, as described in more detail in FIG. 5, and stores these values (Broad_1, Broad_2). At 325, control displays the calculated amounts of material needed to finish the current field using a broadcast application to the operator. For example, control outputs the calculated values to the operator interface 145. In some implementations, control continues with 330; in other implementations, control progresses to 340.

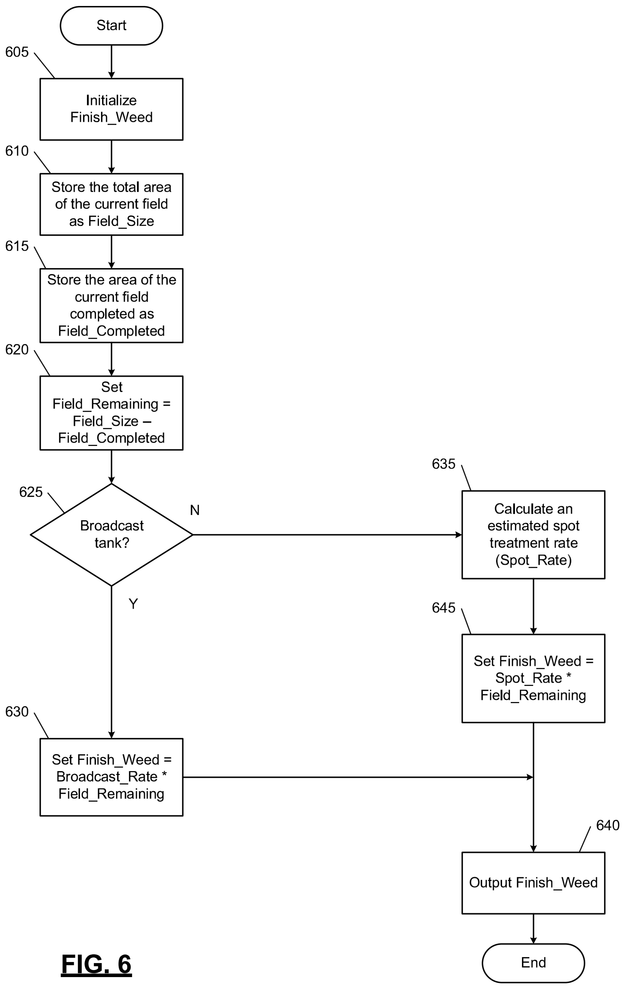

At 330, control calculates the amount of material in each tank needed to finish the field the agricultural sprayer 108 is currently operating in based on weed data-e.g., the amount of weeds present in the current field-as described in more detail in FIG. 6, and stores these values (Weed_1, Weed_2). At 335, control displays the calculated amounts of material needed to finish the current field based on weed data to the operator. For example, control outputs the calculated values to the operator interface 145. Control continues with 340.

At 340, control determines if a finish field using broadcast option has been selected. For example, control determines if the operator has selected the "Finish field (broadcast)" option via the operator interface 145. If so, control progresses to 345; otherwise, control transfers to 350. At 345, control determines if either of the stored broadcast amount values (Broad_1, Broad_2) are greater than the calculated fill amounts (Fill_1, Fill_2) for the respective tank. In other words, if more than a tank full of material is needed to finish the current field using a broadcast operation. If so, control transfers to 355; otherwise, control progresses to 360. At 360 control sets the loading values for the tanks of the agricultural sprayer 108 (Load_1, Load_2) equal to the stored values for the amounts of material needed to finish the current field using a broadcast application of the material (Broad_1, Broad_2). Control then progresses to 365.

At 350, control determines if a fill tanks option has been selected. For example, control determines if the operator has selected the "Fill my tank" option via the operator interface 145. If so, control progresses to 355; otherwise control transfers to 370.

At 355, control sets the loading values for the tanks of the agricultural sprayer 108 (Load_1, Load_2) equal to the stored value for the amount of material needed to fill each tank of the agricultural sprayer 108 (Fill_1, Fill_2). Control then progresses to 365.

At 370, control determines if a finish field based on an amount of weeds option has been selected. For example, control determines if the operator has selected the "Finish field (based on weed pressure map)" option via the operator interface 145. If so, control progresses to 375; otherwise, control returns to 310. At 375, control determines if either of the stored weed data amount values (Weed_1, Weed_2) are greater than the calculated fill amounts (Fill_1, Fill_2) for the respective tank. In other words, if more than a tank full of material is needed to finish the current field based on the field data. If so, control transfers to 355; otherwise, control progresses to 380. At 380 control sets the loading values for the tanks of the agricultural sprayer 108 (Load_1, Load_2) equal to the stored values of the amounts of material needed to finish the current field based on weed data (Weed_1, Weed_2). Control then progresses to 365.

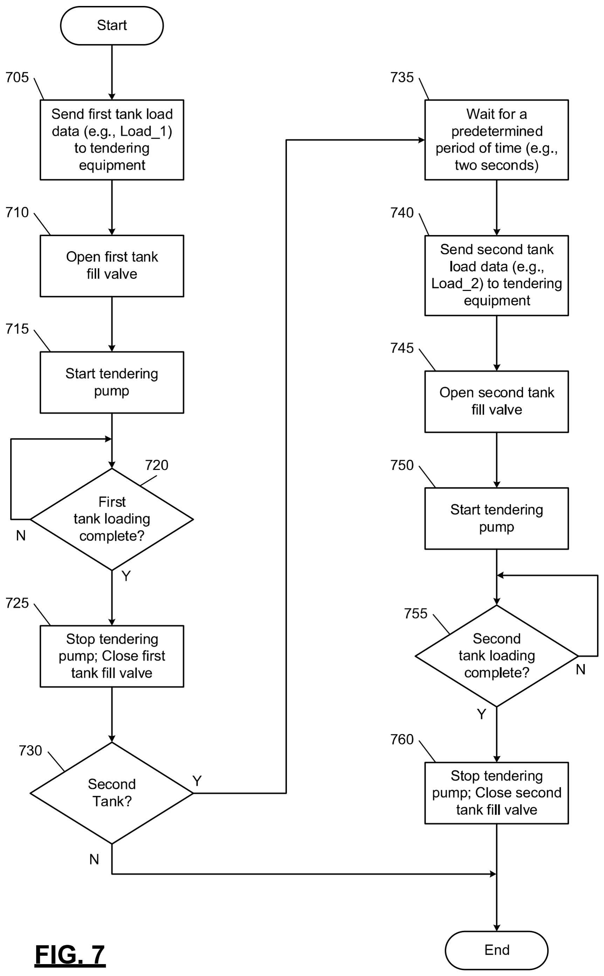

At 365, control determines if a tendering operation has been selected. For example, control determines if the operator has selected a "Start Job" option via the operator interface 145. If so, control progresses to 385; otherwise, control returns to 310. At 385, control performs the tendering operation, as described in more detail in FIG. 7. Control then returns to 305.

In FIG. 4, an example process of determining an amount of material needed to fill a tank of the agricultural sprayer 108 begins at 405. At 405, control initializes a variable to store a fill value of the tank. For example, control sets Tank_Fill to zero. Control progresses to 410, where control determines and stores a capacity of the tank (Tank_Cap).

At 415, control determines the current level of material in the tank and stores the value (Tank_Current). For example, control receives a signal from a level sensor for the tank-e.g., the first level sensor 150 or the second level sensor 155-and sets Tank_Current to a value associated with the signal. At 420, control determines the amount needed to fill the tank based on the current level of the tank and the capacity of the tank. For example, control sets Tank_Fill equal to the difference between Tank_Cap and Tank_Current.

Control then progresses to 425, where control outputs the determined amount of material needed to fill the tank. For example, control outputs Tank_Fill. Control then ends.

In FIG. 5, an example process of determining the amounts of material needed by the agricultural sprayer 108 to finish the current field by broadcasting the material begins at 505. At 505, control initializes a variable to store the determined material amount. For example, control sets Field_Finish_Broad and Field_Finish_Spot each to zero, Field_Finish_Broad corresponds to an amount of material to be broadcast onto the remainder of the field and Field_Finish_Spot corresponds to an amount material needed to spot treat the remainder of the field.

At 510, control determines the total area of the current field that the agricultural sprayer 108 is operating in and stores the value. For example, control determines the size of the current field based on the received field data and stores the value as Field_Size. At 515, control determines the area of the current field that has been completed and stores the value. For example, control determines the size of the completed portion of the current field based on the field data or another source of progress of the agricultural machine-e.g., a GNSS and/or a path planning unit) and stores the value as Field_Completed.

At 520, control determines the size of the portion of the current field that has not yet been completed based on the stored size of the field and the size of the portion of the field that has been completed and then stores the determined value. For example, control sets Field_Remaining to the difference between Field_Size and Field_Completed. Control continues with 525.

At 525, control determines the amount of broadcast material needed to complete the current field based on the stored size of the portion of the current field that has not yet been completed and an application rate associated with the current field. For example, control sets Finish_Broadcast equal to Spray_Rate multiplied by Field_Remaining. Control continues with 530.

At 530 control determines if the tank holds material to be broadcast onto the field. If so, control progresses to 535; otherwise control transfers to 540. At 535, control outputs the determined amount of broadcast material needed to finish the field. For example, control outputs Field_Finish_Broad. Control then ends.

At 540, control determines the amount of spot material needed to complete the current field based on the determined amount of broadcast material needed to complete the current field. For example, control sets Field_Finish_Spot equal to current level of the tank holding the spot material times the ratio of Field_Finish_Broad to the current level of the tank holding the broadcast material. At 545, control outputs the determined amount of spot material needed to finish the field. For example, control outputs Field_Finish_Spot. Control then ends.

In FIG. 6, an example process of determining the amounts of material needed by the agricultural sprayer 108 to finish the current field based on weed data begins at 605. At 605, control initializes a variable to store the determined material amount. For example, control sets Finish_Weed equal to zero. Control continues with 610.

At 610, control determines the total area of the current field that the agricultural sprayer 108 is operating in and stores the value. For example, control determines the size of the current field based on the received field data and stores the value as Field_Size. At 615, control determines the area of the current field that has been completed and stores the value. For example, control determines the size of the completed portion of the current field based on the field data or another source of progress of the agricultural machine-e.g., a GNSS and/or a path planning unit) and stores the value as Field_Completed.

At 620, control determines the size of the portion of the current field that has not yet been completed based on the stored size of the field and the size of the portion of the field that has been completed and then stores the determined value. For example, control sets Field_Remaining to the difference between Field_Size and Field_Completed. Control continues with 625.

At 625 control determines if the tank holds material to be broadcast onto the field. If so, control progresses to 630; otherwise, control transfers to 635. At 630, control determines the amount of broadcast material needed to complete the current field based on the stored size of the portion of the current field that has not been completed and an application rate associated with the current field. For example, control sets Finish_Weed equal to Spray_Rate multiplied by Field_Remaining. Control then progresses to 640.

At 635, control calculates an estimated spot treatment rate. For example, control sets Spot_Rate to a value based on the field data. In some implementations, control may set the value of Spot_Rate based on a weed pressure map of the current field that the agricultural sprayer 108 is operating in. In other implementations, control may set the value of Spot_Rate based on historical application data associated with the current field-e.g., an average of one or more prior spot treatment application rates for the field. Control continues with 645.

At 645, control determines the amount of spot treatment material needed to complete the current field based on the stored size of the portion of the current field that has not been completed and an estimated spot treatment rate. For example, control sets Finish_Weed equal to Spot_Rate multiplied by Field_Remaining. Control then progresses to 640.

At 640, control outputs the determined amount of broadcast material needed to finish the field. For example, control outputs Finish_Weed. Control then ends.

In FIG. 7, an example process of performing a tendering operation begins at 705, where control sends the amount of material to be loaded into the first tank 110 to the tendering equipment. For example, control sends Load_1 to the tendering equipment. At 710, control opens the fill valve for the first tank 110. For example, control generates a signal to open the first tank fill valve 160. At 715, control commands the start of a tendering pump. For example, control sends an instruction to the tendering equipment that causes the tendering equipment to activate the tendering pump. Control continues with 720.

At 720, control determines if the loading of the first tank 110 is complete. For example, control determines if the tendering equipment has provided an indication that the tendering equipment has transferred an amount of material equal to Load_1 to the agricultural sprayer 108. If so, control progresses to 725; otherwise, control returns to 720.

At 725, control commands a stop of the tendering pump. For example, control sends an instruction to the tendering equipment that causes the tendering equipment to deactivate the tendering pump. At 725, control also closes the fill valve for the first tank 110-e.g., the first tank fill valve 160. Control continues with 730.

At 730, control determines if the agricultural sprayer 108 includes a second tank. If so, control progresses with 735; otherwise, control ends. At 735, control delays for a predetermined period of time. In some implementations, control waits for two seconds before progressing to 740. In other implementations, control waits another suitable period of time before progressing to 740.

At 740, control sends the amount of material to be loaded into the second tank 112 to the tendering equipment. For example, control sends Load_2 to the tendering equipment. At 745, control opens the fill valve for the second tank 112. For example, control generates a signal to open the second tank fill valve 165. At 750, control commands the start of the tendering pump. For example, control sends an instruction to the tendering equipment that causes the tendering equipment to reactivate the tendering pump. Control continues with 755.

At 755, control determines if the loading of the second tank 112 is complete. For example, control determines if the tendering equipment has provided an indication that the tendering equipment has transferred an amount of material equal to Load_2 to the agricultural sprayer 108. If so, control progresses to 760; otherwise, control returns to 755.

At 760, control commands a stop of the tendering pump. For example, control sends an instruction to the tendering equipment that causes the tendering equipment to deactivate the tendering pump. At 760, control also closes the fill valve for the second tank 112-e.g., the second tank fill valve 165. Control then ends.

The foregoing description is merely illustrative in nature and is in no way intended to limit the disclosure, its application, or uses. The broad teachings of the disclosure can be implemented in a variety of forms. Therefore, while this disclosure includes particular examples, the true scope of the disclosure should not be so limited since other modifications will become apparent upon a study of the drawings, the specification, and the following claims. It should be understood that one or more steps within a method may be executed in different order (or concurrently) without altering the principles of the present disclosure. Further, although each of the embodiments is described above as having certain features, any one or more of those features described with respect to any embodiment of the disclosure can be implemented in and/or combined with features of any of the other embodiments, even if that combination is not explicitly described. In other words, the described embodiments are not mutually exclusive, and permutations of one or more embodiments with one another remain within the scope of this disclosure.

Spatial and functional relationships between elements (for example, between modules, circuit elements, semiconductor layers, etc.) are described using various terms, including "connected," "engaged," "coupled," "adjacent," "next to," "on top of," "above," "below," and "disposed." Unless explicitly described as being "direct," when a relationship between first and second elements is described in the above disclosure, that relationship can be a direct relationship where no other intervening elements are present between the first and second elements, but can also be an indirect relationship where one or more intervening elements are present (either spatially or functionally) between the first and second elements.

In this application, the term "or" is used in its inclusive sense-i.e., a non-exclusive logical OR-so that when used, for example, to connect a list of elements, the term "or" means one, some, or all of the elements in the list.

As used herein, the phrase at least one of A, B, and C should be construed to mean a logical (A OR B OR C), using a non-exclusive logical OR, and should not be construed to mean "at least one of A, at least one of B, and at least one of C." The term subset does not necessarily require a proper subset. In other words, a first subset of a first set may be coextensive with (equal to) the first set.

In the figures, the direction of an arrow, as indicated by the arrowhead, generally demonstrates the flow of information (such as data or instructions) that is of interest to the illustration. For example, when element A and element B exchange a variety of information but information transmitted from element A to element B is relevant to the illustration, the arrow may point from element A to element B. This unidirectional arrow does not imply that no other information is transmitted from element B to element A. Further, for information sent from element A to element B, element B may send requests for, or receipt acknowledgements of, the information to element A.

In this application, including the definitions below, the term "module" or the term "controller" may be replaced with the term "circuit." The term "module" may refer to, be part of, or include: an Application Specific Integrated Circuit (ASIC); a digital, analog, or mixed analog/digital discrete circuit; a digital, analog, or mixed analog/digital integrated circuit; a combinational logic circuit; a field programmable gate array (FPGA); a processor circuit (shared, dedicated, or group) that executes code; a memory circuit (shared, dedicated, or group) that stores code executed by the processor circuit; other suitable hardware components that provide the described functionality; or a combination of some or all of the above, such as in a system-on-chip.

The module may include one or more interface circuits. In some examples, the interface circuit(s) may implement wired or wireless interfaces that connect to a local area network (LAN) or a wireless personal area network (WPAN). Examples of a LAN are Institute of Electrical and Electronics Engineers (IEEE) Standard 802.11-2016 (also known as the WIFI wireless networking standard) and IEEE Standard 802.3-2015 (also known as the ETHERNET wired networking standard). Examples of a WPAN are the BLUETOOTH wireless networking standard from the Bluetooth Special Interest Group and IEEE Standard 802.15.4.

The module may communicate with other modules using the interface circuit(s). Although the module may be depicted in the present disclosure as logically communicating directly with other modules, in various implementations the module may actually communicate via a communications system. The communications system includes physical and/or virtual networking equipment such as hubs, switches, routers, and gateways. In some implementations, the communications system connects to or traverses a wide area network (WAN) such as the Internet. For example, the communications system may include multiple LANs connected to each other over the Internet or point-to-point leased lines using technologies including Multiprotocol Label Switching (MPLS) and virtual private networks (VPNs).

In various implementations, the functionality of the module may be distributed among multiple modules that are connected via the communications system. For example, multiple modules may implement the same functionality distributed by a load balancing system. In a further example, the functionality of the module may be split between a server (also known as remote, or cloud) module and a client (or, user) module.

Some or all hardware features of a module may be defined using a language for hardware description, such as IEEE Standard 1364-2005 (commonly called "Verilog") and IEEE Standard 1076-2008 (commonly called "VHDL"). The hardware description language may be used to manufacture and/or program a hardware circuit. In some implementations, some or all features of a module may be defined by a language, such as IEEE 1666-2005 (commonly called "SystemC"), that encompasses both code, as described below, and hardware description.

The term code, as used above, may include software, firmware, and/or microcode, and may refer to programs, routines, functions, classes, data structures, and/or objects. The term shared processor circuit encompasses a single processor circuit that executes some or all code from multiple modules. The term group processor circuit encompasses a processor circuit that, in combination with additional processor circuits, executes some or all code from one or more modules. References to multiple processor circuits encompass multiple processor circuits on discrete dies, multiple processor circuits on a single die, multiple cores of a single processor circuit, multiple threads of a single processor circuit, or a combination of the above. The term shared memory circuit encompasses a single memory circuit that stores some or all code from multiple modules. The term group memory circuit encompasses a memory circuit that, in combination with additional memories, stores some or all code from one or more modules.

The term memory circuit is a subset of the term computer-readable medium. The term computer-readable medium, as used herein, does not encompass transitory electrical or electromagnetic signals propagating through a medium (such as on a carrier wave); the term computer-readable medium may therefore be considered tangible and non-transitory. Nonlimiting examples of a non-transitory computer-readable medium are nonvolatile memory circuits (such as a flash memory circuit, an erasable programmable read-only memory circuit, or a mask read-only memory circuit), volatile memory circuits (such as a static random access memory circuit or a dynamic random access memory circuit), magnetic storage media (such as an analog or digital magnetic tape or a hard disk drive), and optical storage media (such as a CD, a DVD, or a Blu-ray Disc).

The apparatuses and methods described in this application may be partially or fully implemented by a special purpose computer created by configuring a general purpose computer to execute one or more particular functions embodied in computer programs. The functional blocks and flowchart elements described above serve as software specifications, which can be translated into the computer programs by the routine work of a skilled technician or programmer.

The computer programs include processor-executable instructions that are stored on at least one non-transitory computer-readable medium. The computer programs may also include or rely on stored data. The computer programs may encompass a basic input/output system (BIOS) that interacts with hardware of the special purpose computer, device drivers that interact with particular devices of the special purpose computer, one or more operating systems, user applications, background services, background applications, etc.

The computer programs may include: (i) descriptive text to be parsed, such as HTML (hypertext markup language), XML (extensible markup language), or JSON (JavaScript Object Notation), (ii) assembly code, (iii) object code generated from source code by a compiler, (iv) source code for execution by an interpreter, (v) source code for compilation and execution by a just-in-time compiler, etc. As examples only, source code may be written using syntax from languages including C, C++, C#, Objective-C, Swift, Haskell, Go, SQL, R, Lisp, Java^{®}, Fortran, Perl, Pascal, Curl, OCaml, JavaScript^{®}, HTML5 (Hypertext Markup Language 5th revision), Ada, ASP (Active Server Pages), PHP (PHP: Hypertext Preprocessor), Scala, Eiffel, Smalltalk, Erlang, Ruby, Flash^{®}, Visual Basic^{®}, Lua, MATLAB, SIMULINK, and Python^{®}.

## Claims

1. A tendering system for an agricultural sprayer comprising:
a first tank sensor configured to generate a first signal based on a level of fluid in a first tank of the agricultural sprayer;
a first fill valve configured to control a flow of liquid from tendering equipment into the first tank of the agricultural sprayer; and
a tendering module configured to control the actuation of the first tank fill valve and tendering equipment based on at least one of the first signal generated by the first tank sensor and field data.

2. The tendering system of claim 1, further comprising:
a second tank sensor configured to generate a second signal based on a level of fluid in a second tank of the agricultural sprayer; and
a second fill valve configured to control a flow of liquid from the tendering equipment into the second tank of the agricultural sprayer,
wherein the tendering module is configured to control the actuation of the second tank fill valve and the tendering equipment based on at least one of the second signal generated by the second tank sensor and the field data.

3. The tendering system of claim 1 or 2, wherein the tendering module includes:
a fill tank module configured:
to receive the first signal generated by the first tank sensor, and
determine, based on the first signal and a capacity of the first tank, an amount of material needed to fill the first tank, and
a tank loading module configured to:
receive the amount of material needed to fill the first tank from the fill tank module, and
selectively generate a first control signal that causes the tendering equipment to transfer the amount of material needed to fill the first tank to the first tank.

4. The tendering system of claim 3, wherein:
the tendering module includes a field finish module configured to:
receive the first signal generated by the first tank sensor and the field data, and
determine an amount of material needed to finish a spraying operation in a field the agricultural sprayer is operating in, and
the tank loading module is configured to selectively generate a second control signal that causes the tendering equipment to transfer the amount of material needed to finish the spraying operation to the first tank.

5. The tendering system of claim 4, wherein the tank loading module generates the first control signal or the second control signal in response to receiving a selection by an operator of the agricultural sprayer.

6. The tendering system of claim 4 or 5, wherein the field data includes agronomic information of the field the agricultural sprayer is operating in.

7. The tendering system of claim 6, wherein the agronomic information includes at least one of a size of the field, an area of the field that has been traversed by the agricultural sprayer or that material has been applied to, crop density, weed pressure, and prescribed application rates.

8. The tendering system of one of the claims 3 to 7, further comprising an operator display configured to receive the amount of material needed to fill the first tank from the fill tank module and display a visual indication of the amount of material needed to fill the first tank valve to an operator of the agricultural sprayer.

9. A method of tendering an agricultural sprayer comprising:
determining a level of fluid in a first tank of the agricultural sprayer,
calculating an amount of material needed to fill the first tank based on the determined level of fluid in the first tank and a capacity of the first tank, and
in response to receiving a first user input, opening a first fill valve to permit a flow of liquid from tendering equipment into the first tank and commanding the tendering equipment to transfer the amount of material needed to fill the first tank to the first tank via the first fill valve.

10. The method of tendering an agricultural sprayer of claim 9, further comprising:
determining a level of fluid in a second tank of the agricultural sprayer,
calculating an amount of material needed to fill the second tank based on the determined level of fluid in the second tank and a capacity of the second tank, and
in response to receiving the first user input, opening a second fill valve to permit a flow of liquid from the tendering equipment into the second tank and commanding the tendering equipment to transfer the amount of material needed to fill the second tank to the second tank via the second fill valve.

11. The method of tendering an agricultural sprayer of claim 9 or 10, further comprising, in response to determining that the tendering equipment transferred the amount of material needed to fill the first tank to the first tank, (i) commanding the tendering equipment to stop transferring material to the first tank and (ii) closing the first fill valve.

12. The method of tendering an agricultural sprayer of one of the claims 9 to 11, wherein commanding the tendering equipment to transfer the amount of material needed to fill the first tank to the first tank includes communicating with the tendering equipment via a wireless connection.

13. The method of tendering an agricultural sprayer of one of the claims 9 to 12, further comprising:
receiving field data for a field the agricultural sprayer is operating in,
determining, based on the received data for, an amount of material needed to finish a spraying operation in the field, and
in response to receiving a second user input, opening the first fill valve to permit a flow of liquid from the tendering equipment into the first tank and commanding the tendering equipment to transfer the amount of material needed to finish the spraying operation to the first tank via the first fill valve.

14. The method of tendering an agricultural sprayer of claim 13, wherein the field data includes agronomic information of the field the agricultural sprayer is operating in.

15. The method of tendering an agricultural sprayer of claim 14, wherein the agronomic information includes at least one of a size of the field, an area of the field that has been traversed by the agricultural sprayer or that material has been applied to, crop density, weed pressure, and prescribed application rates.
